# EUROPEAN PATENT APPLICATION

(11) **EP 1 890 375 A2**
(43) Date of publication of application: **20.02.2008**
(21) Application number: 07114238.4
(22) Date of filing: 13.08.2007
(51) Int. Cl.: H02K 37/18

(54) **Stepping motor**

(30) Priority: 16.08.2006 KR 20060077032
(71) Applicant: Samsung Electronics Co., Ltd., Suwon-si, Gyeonggi-Do (KR); Jahwa Electronics Co., Ltd., Cheongwon-gun, Chungcheongbuk-do (KR)
(72) Inventor: Shin, Doo-Sik, Yeongtong-gu, Suwon-si , Gyeonggi-do (KR); Shin, Jeong-Kil, Yeongtong-gu, Suwon-si , Gyeonggi-do (KR); Seol, Jin-Soo, Bugi-myeon, Cheongwon-gun,Chungcheongbuk-do (KR); Lee, Jong-Pil, Bugi-myeon, Cheongwon-gun,Chungcheongbuk-do (KR); Chong, Young-Bin, Bugi-myeon, Cheongwon-gun,Chungcheongbuk-do (KR)
(74) Representative: Grünecker, Kinkeldey, Stockmair & Schwanhäusser Anwaltssozietät

(57) **Abstract**

A stepping motor (100,300,400,500) includes an annular permanent magnet (133,333,433,533), a coupling member (132,332,432,532) inserted into the center of the permanent magnet, the coupling member having screw threads formed on the inner periphery thereof, and a shift (131,331,431,531) screwed with the screw threads of the coupling member. The turning force applied to the coupling member is transmitted to the shift, and the shift performs rectilinear movement along the screw threads.

## Description

### BACKGROUND OF THE INVENTION

### 1. Field of the Invention

The present invention relates to a small-sized actuator, and in particular to a small-sized actuator having a linear stepping motor capable of precisely controlling the automatic focusing and optical zooming operations of an optical system mounted in a small-sized electronic appliance, such as a digital camera or a mobile phone.

### 2. Description of the Related Art

Recent portable digital and electronic appliances provide various functions. In particular, with the spread of miniaturized camera optic systems, camera optic system equipped with digital and electronic appliances are widespread. Such digital and electronic appliances include various types of appliances with a plurality of similar features, such as PMPs, MP3s, digital cameras, mobile phones, PDAs, and notebook PCs. Such a composite electronic mode has already been employed in mobile phones. As such, mobile phones equipped with an optical lens and an image sensor (hereinafter, to be referred to as "camera phone") have already been popularized.

As a result of advance in camera optic systems and image sensors, camera phones are equipped with a high-pixel image sensor and a high-functional camera optic system including an automatic focusing control device, a focus-vibration prevention device and an optical zoom device. The focusing control device and the focus-vibration prevention device are employed to minimize the scattering of a photographed image caused as a subject is shaken when it is photographed.

Digital and electronic appliances are become smaller and require a more miniaturized camera optic system. In order to meet the above-mentioned requirement for a portable camera phone, more research is focused in providing a structure for installing an automatic focusing control device, an optical zoom device, etc. to the outer side of a camera optic system and in minimizing the size of an actuator.

The above-mentioned actuator may be classified into a voice coil motor type, a piezoelectric type or a stepping motor type. The voice coil type is inexpensive and has a simple structure, which makes it easy to implement a small-sized article. However, the voice coil type has a disadvantage in that power consumption is high, and it requires a separate position detection and control means due to constant power requirement.

The piezoelectric type is advantageous in that power consumption is low, response characteristics and moving resolution are excellent, and it makes it easy to implement a small-sized article.

Meanwhile, a stepping motor type actuator is disclosed in detail in U.S. Patent No. 6,747,382 (entitled "motor") by Yajima Katsuhide et al., in which the motor of Katsuhide et al. includes a rotor, a stator core with a stator opposed to the rotor, a rotary shaft extending through and fixing the rotor, a bearing for rotatably supporting the rotary shaft, and an anchoring part (cap) for anchoring the bearing. Katsuhide et al. also discloses a structure for forming the bearing and the bearing anchoring part from a resin. The motor of Katsuhide et al. further includes a groove for applying adhesive agent for securing the rotary shaft to the rotor, an end for fitting a C type washer, and a lead screw on an output part extending to the outer side of the stepping motor.

As a result, the space to be secured so as to mount the stepping motor type actuator additionally requires a space corresponding to the width of a movable member extending from a lead screw contact to a camera lens in the outside of the stepping motor, beyond a space corresponding to the extended length of the lead screw of the rotary shaft. Therefore, a digital and electronic appliance equipped with a camera lens, a camera phone or the like has a problem in that if they are provided with a stepping motor type actuator, their volume increases. If the outer diameter of the stepping motor is minimized, the turning force of the stepping motor is reduced. As a result, the camera lens cannot be smoothly operated.

In other words, a conventional actuator of a camera optic system equipped in portable camera phones or digital appliances has a problem in that its power consumption is very high or its volume is undesirably large.

### SUMMARY OF THE INVENTION

Accordingly, the present invention has been made to solve the above-mentioned problems occurring in the prior art and provides additional advantages.

The object of the present invention is to provide a stepping motor with a low power consumption and which can be applied to either a slimmed camera phone or a slimmed digital phone. This object is solved by the subject matter of the independent claims.

According to a first aspect of the present invention, there is provided a stepping motor including: an annular permanent magnet; a coupling member inserted into the center of the permanent magnet, the coupling member having screw threads formed on the inner periphery thereof; and a shift screwed with the screw threads of the coupling member so as to perform a rectilinear movement along the screw threads.

According to a second aspect of the present invention, there is provided a stepping motor including: a rotary unit including an annular permanent magnet, a coupling member inserted into the center of the permanent magnet, the coupling member having screw threads formed on the inner periphery thereof, and a shift screwed with the screw threads of the coupling member so as to perform a rectilinear movement along the screw threads; and a yoke unit including an annular bobbin surrounding the lateral surface of the permanent magnet, and upper and lower yokes coupled to be up-down symmetrical to each other with reference to the bobbin, each of the upper and lower yokes having a plurality of teeth, and an electromagnetic coil surrounding the teeth.

### BRIEF DESCRIPTION OF THE DRAWINGS

The above features and advantages of the present invention will be more apparent from the following detailed description taken in conjunction with the accompanying drawings, in which:
FIG. 1 is an exploded perspective view of a stepping motor according to a first embodiment of the present invention;
FIG. 2 is a cross-sectional view showing the stepping motor of FIG. 1 in the assembled state;
FIG. 3 is a perspective view showing the stepping motor of FIG. 2 in the assembled state;
FIG. 4 is a perspective view showing a lower casing equipped with the bobbin and the upper and lower yokes of FIGs. 1 to 3;
FIG. 5 is a perspective view showing the rotary unit of FIG. 1;
FIG 6 is a perspective view of a plain plate according to the present invention;
FIG. 7 is a perspective view showing the state in which the stepping motor of FIG. 1 and the plain plate of FIG. 6 are assembled with each other;
FIG. 8 is a perspective view showing the shift of FIG. 1;
FIG. 9 is a graph showing a measured attractive force relationship between the shift and an anti-reverse-locking member;
FIGs. 10 and 11 are perspective views for describing the movement of the stepping motors shown in FIGs. 1 and 7, respectively;
FIG. 12 is a cross-sectional view of a stepping motor according to a second embodiment of the present invention;
FIG. 13 is a cross-sectional view of a stepping motor according to a third embodiment of the present invention; and
FIG. 14 is a cross-sectional view of a stepping motor according to a fourth embodiment of the present invention.

### DETAILED DESCRIPTION OF THE INVENTION

Hereinafter, embodiments of the present invention will be described with reference to the accompanying drawings. In the following description, the same elements will be designated by the same reference numerals although they are shown in different drawings.

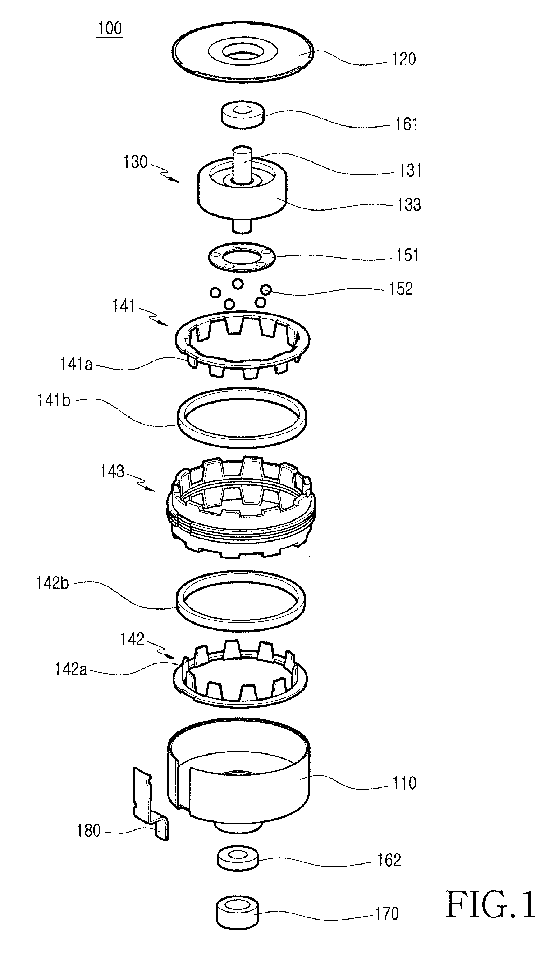

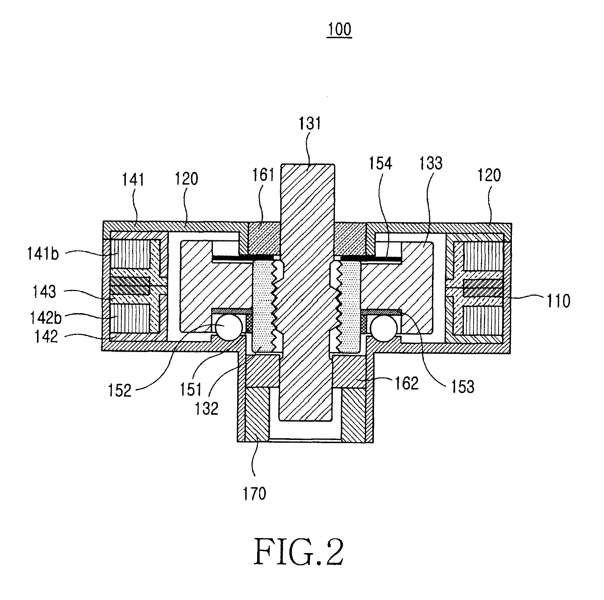

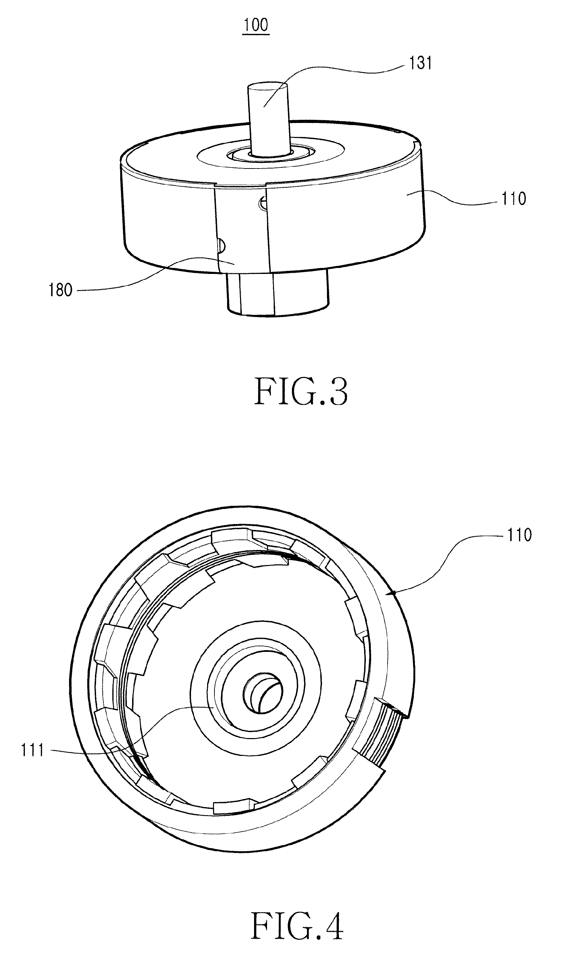

FIG. 1 is an exploded perspective view of a stepping motor according to a first embodiment of the present invention. In addition, FIG. 2 is a cross-sectional view showing the stepping motor of FIG. 1 in the assembled state, and FIG. 3 is a perspective view showing the stepping motor of FIG. 2 in the assembled state. Furthermore, FIG. 4 is a perspective view showing a lower casing equipped with the bobbin and the upper and lower yokes of FIGs. 1 to 3.

As shown in FIGs. 1-4 and 6-7, the stepping motor 100 according to the present invention includes a rotary unit 130, a yoke unit, an upper housing 120, a lower housing 110, within which the rotary unit 130 and the yoke unit are installed, upper and lower bearings 161 and 162, a washer 154, a reverse-locking prevention member 170 positioned below the lower bearing 162, a support member 190, and a plain plate 200.

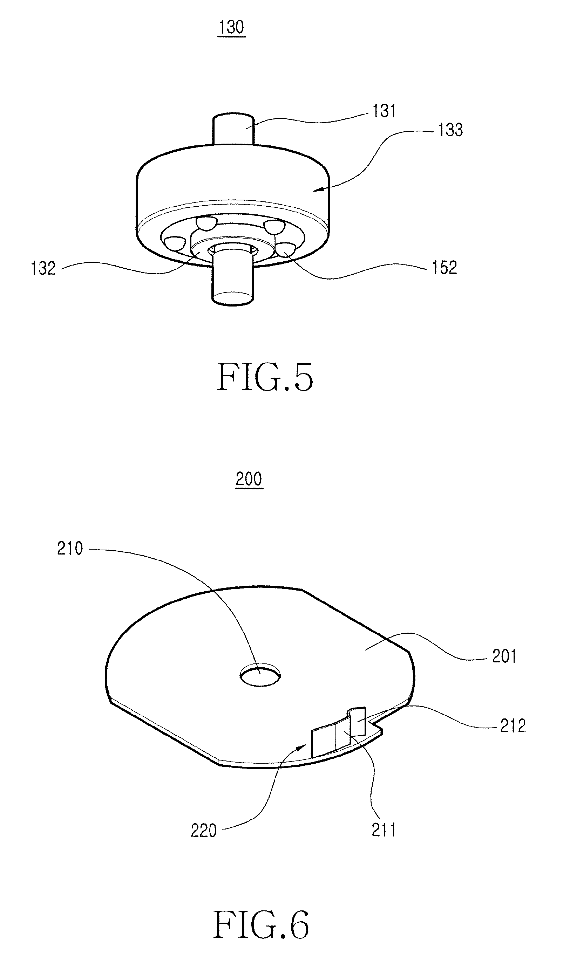

FIG. 5 is a perspective view of the rotary unit 130. As shown, the rotary unit 130 includes an annular permanent magnet 133, a coupling member 132 inserted into the center of the permanent magnet 133 and has screw threads formed on the inner periphery thereof, and a shift 131 rectilinearly movable as the screw threads move.

The coupling member 132 is formed in a tubular shape and having screw threads formed on the inner periphery thereof. The shift 131 is inserted through the center of the coupling member 132 and has screw threads corresponding to the screw threads of the coupling member 132. That is, the coupling member 132 and the shift 131 are screwed with each other, and the shift 131 rotates along the screw threads of the coupling member 132 and performs rectilinear movements up and down coaxially to the coupling member 132.

Referring back to FIG. 1, the yoke unit includes an annular bobbin 143 surrounding the lateral surface of the permanent magnet 133, upper and lower yokes 141 and 142 which are coupled to be up-down symmetrical to each other with reference to the bobbin 143, the upper and lower yokes 141 and 142 having a plurality of teeth 141a and 142a projecting toward the bobbin 143, and electromagnetic coils 141b and 142b surrounding the teeth 141a and 142a, respectively. The bobbin 143 may be configured by an insulation member, and two or more yokes can be secured to the inner periphery of the bobbin 143.

The yoke unit is supplied with electricity and controlled through a terminal substrate 180 attached to an open side of the lower housing 110.

The lower housing 110 is formed in a shape of a cap, within which the yoke unit and the rotary unit 130 can be mounted. As shown in FIG. 4, the bottom surface of the lower housing 110 may be formed with a rail 111 at an area to be in contact with first ball bearings 152 so as to prevent the first ball bearings 152 from running out of the track thereof and to assure the smooth rotation of the first ball bearings 152.

In addition, the lower housing 110 may have a central part, through which the shift 131 extends and which is formed in a cylindrical shape extending along an extension of the shift 131 so as to protect the end of the extension of the shift 131 from the outside.

The upper housing 120 covers the open side of the lower housing 110, and a part of the shift 131 projects outward from the central area of the upper housing 120. An upper bearing 161 is positioned at the central area of the upper housing 120, wherein the shift extends through the upper bearing 161 and projects outward from the central area of the upper housing 120.

The upper and lower bearings 161,162 are inserted into the upper and lower housings 110 and 120, respectively, in such a manner that the opposed ends of the shift 131 project from the upper and lower housings 110 and 120.

Referring back to FIG. 2, a washer 154 is interposed between the upper bearing 161 and the permanent magnet 133. The first ball bearings 152 are interposed between the lower housing 110 and the permanent magnet 133, and a bearing guide 151 is positioned to cover a part of the side wall of the coupling member 132, which is in contact with the first ball bearings 152. The first ball bearings 152 minimize the frictional force between the permanent magnet 133 and the lower housing 110 when the permanent magnet 133 rotates, and render the rotary unit 130 to be smoothly rotated.

In addition, the first ball bearings 152 are supported by the rail 111 of the lower housing 110 and the bearing guide 151, whereby they are maintained without running out of the rotation track. The bearing guide 151 is formed with grooves which correspond to the first ball bearings, respectively.

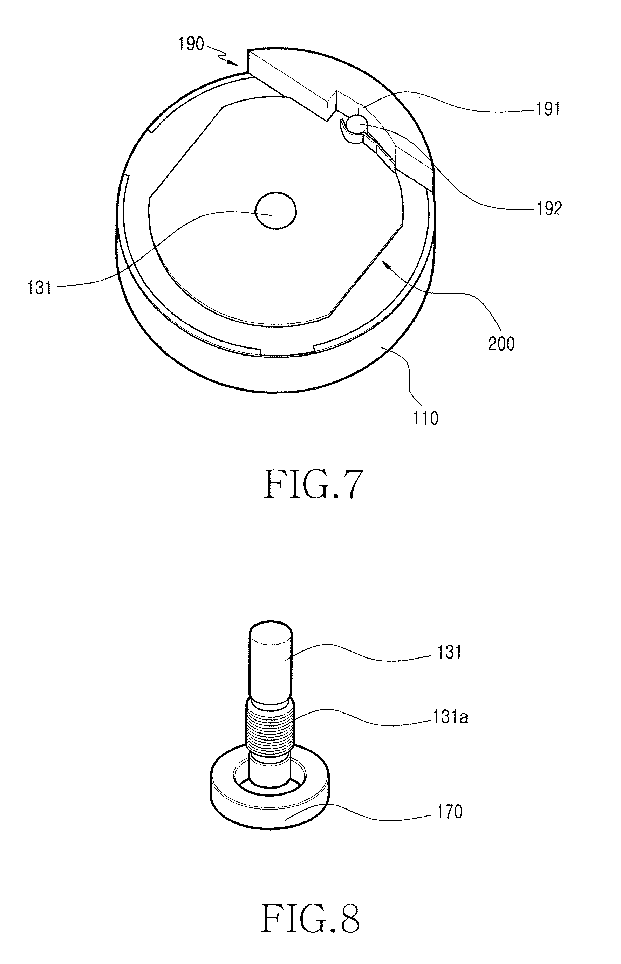

FIG. 6 is a perspective view showing the inventive plain plate 200, and FIG. 7 is a perspective view showing the stepping motor shown in FIG 1 and the plain plate shown in FIG 6 in the assembled state.

Referring to FIGs. 6 and 7, the support member 190 extends toward the upper housing 120 from a part of the lateral surface of the lower housing 110 and has an anti-rotation groove 191 formed at a part of the lateral wall thereof opposed to the shift 131. In addition, the plain plate 200 has a hole formed through the central area thereof so as to anchor the tip end of the shift passing through the upper housing 120, and an anti-rotation member 220 opposed to the anti-rotation groove 191. Alternatively, the support member 190 may also be configured in such a manner that it extends toward the lower housing 120 from a part of the lateral surface of the upper housing 120.

A second ball bearing 192 is positioned between the anti-rotation groove 191 and the plain plate 200. The anti-rotation member 220 of the plain plate 200 is locked to the anti-rotation groove 191, so that the rotation of the anti-rotation member 220 is restricted. As a result, the shift 131 performs the rectilinear movement along the screw threads of the coupling member 132. The second ball bearing 192 minimizes the friction force produced between the anti-rotation groove 191 and the anti-rotation member 220 as the shift rectilinearly moves and prevents the anti-rotation member 220 from running out of the anti-rotation groove 191. The anti-rotation member 220 is formed from a leaf spring or an elastic material and may be formed with a prominence and a depression 211 and 212.

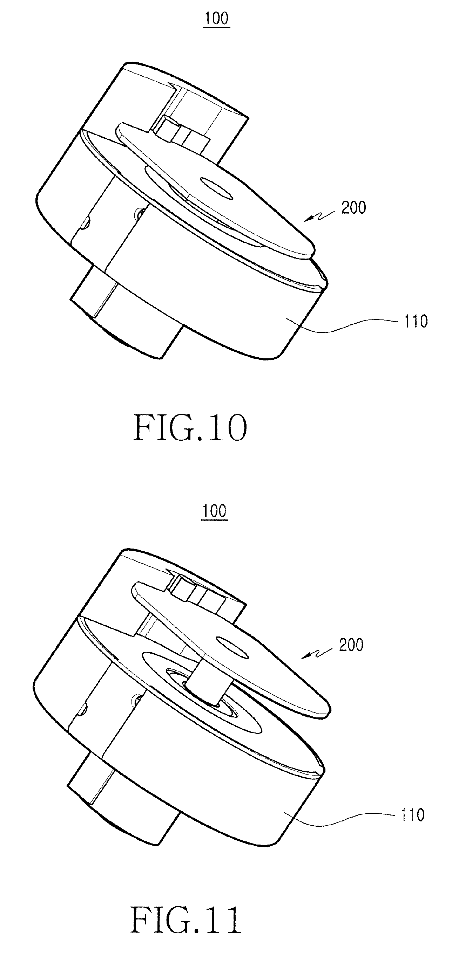

FIGs. 10 and 11 are perspective views for describing the operation of the stepping motor shown in FIGs. 1 and 7. In particular, FIG. 10 shows a state in which the shift 131 is moved to the inner side of the lower housing 110, and FIG. 11 shows a state in which the shift 131 is moved to the outer side of the upper housing 120.

FIG. 8 is a perspective view showing the shift 131 shown in FIG 1. As shown in FIG. 8, a cylindrical permanent magnet may be used as the reverse-locking prevention member 170, which is positioned below the lower bearing 162 to surround the shift 131. In addition, by employing the magnetic member, the shift 131 may smoothly move when the rotary unit 130 rotates because an attractive force is produced from the reverse-locking prevention member 170.

That is, the reverse-locking prevention member 170 is a means for preventing the occurrence of backlash between the coupling member 132 and the shift 131 which are screwed with each other, wherein the reverse-locking prevention member 170 is spaced from the shift 131 without being in contact with the shift 131, and the distribution of magnetic field of the reverse-locking prevention member 170 may be oriented to have an effect on the axis for the rectilinear movement of the shift 131 in a direction perpendicular to the axis. However, the orientation of the distribution of magnetic field may be selected as desired.

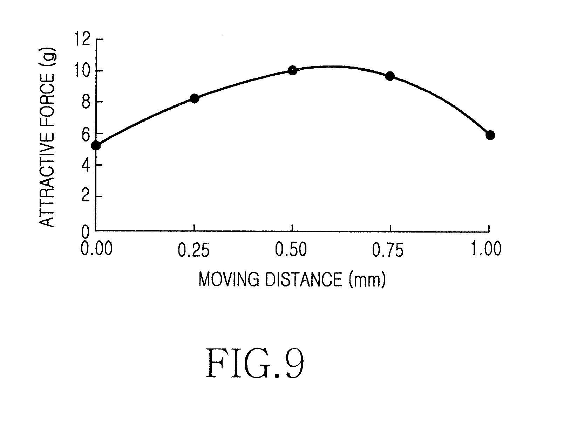

FIG. 9 is a graph for describing the relationship of attractive force produced between the shift 131 and the reverse-locking prevention member 170 having the distribution of magnetic field perpendicular to the moving axis of the shift 131, wherein the x-axis indicates the moving distance of the shift 131, and the y-axis indicates attractive force. "0" on the x-axis indicates the initial state before the shift 131 is driven, which means that the shift 131 is retracted into the stepping motor 100 as shown in FIG. 10, and "1" on the x-axis means that the shift 131 of the stepping motor used for measuring this graph is moved maximum to the outer side of the stepping motor as shown in FIG. 11.

In conclusion, it can be appreciated that the attractive force applied to the shift 131 by the reverse-locking prevention member 170 is gradually increased from the state shown in FIG. 10, and is reduced until the shift 131 arrives at the state shown in FIG. 11 after passing a predetermined point. As shown in FIG. 9, it is possible to minimize the load produced when the shift rectilinearly moves while minimizing the difference in attractive force applied from the reverse-locking prevention member 170 between the most retracted position and the most extended position of the shift 131.

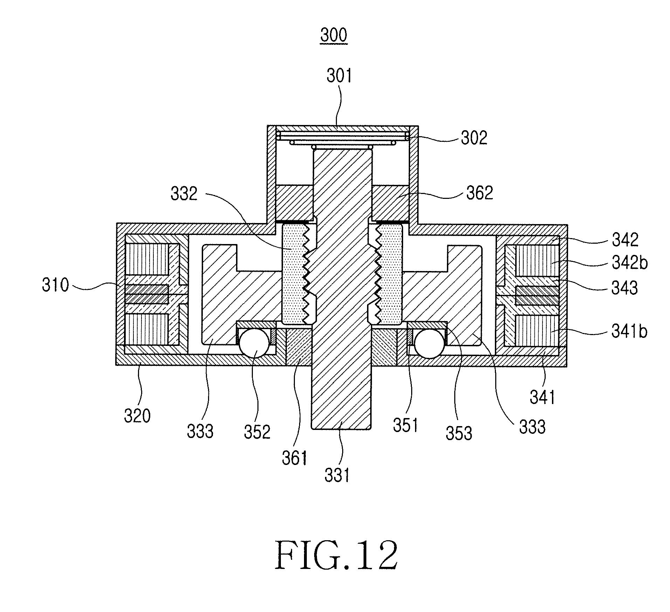

FIG. 12 is a cross-sectional view of a stepping motor according to a second embodiment of the present invention. The second embodiment will be described with reference to FIG. 12 and the description of the same construction as the first embodiment will be omitted to avoid redundancy.

The stepping motor 300 according to the second embodiment includes a lower housing 310, an upper housing 320, a plurality of ball bearings 352, a bearing guide 351, upper and lower bearings 361 and 362, a ball bearings contact member 353, and spring members 301 and 302 positioned below the lower bearing 362.

A rotary unit includes an annular permanent magnet 333, a coupling member 332 inserted through the center of the permanent magnet 333 and having screw threads formed on the inner periphery thereof, and a shift 331 performing a rectilinear movement along the screw threads of the coupling member 332.

A yoke unit includes an annular bobbin 343 surrounding the lateral surface of the permanent magnet 333, and upper and lower yokes 341 and 342 coupled to be up-down symmetrical to each other with reference to the bobbin 343, the upper and lower yokes 341 and 342 having a plurality of teeth projecting toward the bobbin 343, which are in contact with each other, and electromagnetic coils 341b and 342b surrounding the teeth. The bobbin may be configured by an insulation member, and two or more yokes may be secured to the inner periphery thereof.

Spring members 301 and 302 are interposed between a tip end of the shift 331 and the lower housing 310 as a means for preventing the backlash of the shift 331. The spring members 301 and 302 can bias the shift so as to prevent backlash, which may be produced between the coupling member 332 and the shift 331.

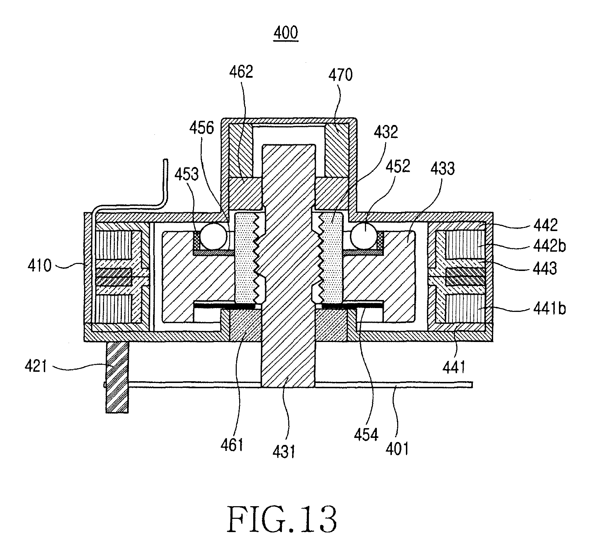

FIG. 13 is a cross-sectional view of a stepping motor according to a third embodiment of the present invention. Again, the description of the same construction as the first embodiment will be omitted to avoid redundancy.

The stepping motor 400 according to the third embodiment includes a rotary unit, a yoke unit, a lower housing 410, within which the rotary unit and the yoke unit are installed, an upper housing 420, a plurality of ball bearings 452, a bearing guide 453, upper and lower bearings 461 and 462, a ball bearings washer 454, a contact member 456 positioned below the ball bearings 452, a reverse-locking prevention member 470 positioned below the lower bearing 462, a guide bar 421, and a plain plate 401.

The rotary unit includes an annular permanent magnet 433, a coupling member 432 inserted through the center of the permanent magnet 433 and having screw threads formed on the inner periphery thereof, and a shift 431 performing a rectilinear movement along the screw threads of the coupling member 432.

The yoke unit includes an annular bobbin 443 surrounding the lateral surface of the permanent magnet 433, and upper and lower yokes 441 and 442 coupled to be up-down symmetrical to each other with reference to the bobbin 443, the upper and lower yokes 441 and 442 having a plurality of teeth projecting toward the bobbin 443, which are in contact, and electromagnetic coils 441b and 442b surrounding the teeth.

The guide bar 421 extends from the upper housing 420 and through a part of the plain plate 401. The tip end of the shift 431 projecting from the upper housing 420 is anchored to the plain plate 401, so that the plain plate 401 restricts the turning force applied to the shift 431, thereby preventing the shift 431 from rotating.

The shift 431, the turning force of which is restricted by the plain plate 401 and the guide bar 421, transmits the turning force applied to the shift 431 to the screw threads screwed with the shift 431, thereby performing a rectilinear movement along the screw threads of the coupling member 432.

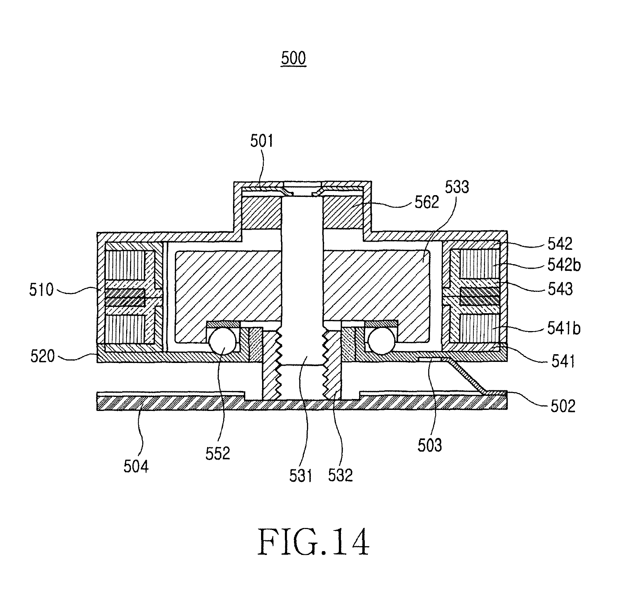

FIG. 14 is a cross-sectional view of a stepping motor according to a fourth embodiment of the present invention. To avoid redundancy, the description of the same construction as the first embodiment will be omitted.

The stepping motor 500 according to the fourth embodiment includes a rotary unit, a yoke unit, a lower housing 510, within which the rotary unit and the yoke unit are installed, an upper housing 520 covering an open side of the lower housing 510, a plain plate 504, an anti-rotation spring 502, one end of which is connected to the plain plate 504 and the other end of which is fitted in a groove 503 formed on a wall of the upper housing 520, an elastic member 501, and a lower bearing 562.

The rotary unit includes an annular permanent magnet 533, a shift 531 inserted through the center of the permanent magnet 533, and a coupling member 532 screwed with an end of the shift 531.

The yoke unit includes an annular bobbin 543 surrounding the lateral surface of the permanent magnet 533, and upper and lower yokes 541 and 542 coupled to be up-down symmetrical to each other with reference to the bobbin 543, the upper and lower yokes 541 and 542 having a plurality of teeth projecting toward the bobbin 543, which are in contact with each other, and electromagnetic coils 541b and 542b surrounding the teeth.

The tip end of the coupling member 532 projecting from the upper housing 520 is anchored to the plain plate 504, and the anti-rotation spring 502 is connected to the plain plate at one end thereof and fitted in the groove 503 formed on the wall of the upper housing 520 at the other end thereof.

The turning force produced by the permanent magnet 533 is transmitted to the coupling member 532 through the shift 531, but the rotation of the coupling member 532 is restricted by the plain plate 504. As a result, the coupling member 532 performs a rectilinear movement along the screw threads of the shift 531.

The movement of the anti-rotation spring 502 is restricted by the groove 503. The groove 503 may be made in a form of a linear rail. In addition, the elastic force of the anti-rotation spring 502 may provide a function of restricting the occurrence of the reverse-locking phenomenon between the coupling member 532 and the shift 531. It is possible to apply a structure in which the permanent magnets according to the first to third embodiments of the present invention are arranged in such a manner that the opposite magnetic poles are repeatedly alternated.

According to the present invention, since a shift, which is a main moving axis for transmitting a turning force, converts the transmitted force into a rectilinear movement, it is possible to provide a stepping motor which can transmit a power with a slimmed volume. Therefore, the inventive stepping motor can be applied to mobile digital appliances and digital cameras which are gradually miniaturized.

## Claims

1. A stepping motor (100,300,400,500) comprising:
a rotary unit (130) having an annular permanent magnet (133, 333,433,533);
a coupling member (132,332,432,532) inserted into the center of the permanent magnet (133,333,433,533), the coupling member (132,332,432,532) having screw threads formed on the inner periphery thereof; and
a shift (131,331,431,531) is screwed with the screw threads of the coupling member (132,332,432,532) so as to provide a rectilinear movement along the screw threads.

2. The stepping motor according to claim 1, comprising:
a yoke unit having an annular bobbin (143,343,443,543) surrounding the lateral surface of the permanent magnet (133,333,433,533) and having upper and lower yokes (141,142,341,342,441,442,541,542) coupled to each other in a symmetric relationship with a reference to the bobbin (143,343,443,543), each of the upper and lower yokes (141,142,341,342,441,442,541,542) having a plurality of teeth (141a,142a) and an electromagnetic coil (141b,142b,341b,342b,441b, 442b,541b,542b) surrounding the teeth (141a,142a).

3. The stepping motor as claimed in claim 1 or 2, further comprising:
a lower housing (110,310,410,510) within which the yoke unit and the rotary unit are mounted;
an upper housing (120,320,420,520) covering an open side of the lower housing, a part of the shift (131,331,431,531) projecting from the central area of the upper housing; and
a plurality of first ball bearings (152,352,452,552) interposed between the lower housing and the permanent magnet (133,333,433,533).

4. The stepping motor as claimed in any previous claim, further comprising upper and lower bearings (161,162,361,362,461,462,562) surrounding the opposite end portions of the shift (131,331,431,531), respectively.

5. The stepping motor as claimed in any previous claim, further comprising a reverse-locking prevention member (170,470) positioned to surround the shift (131,331,431,531) under the lower bearing (162,362,462,562).

6. The stepping motor as claimed in claim 3, wherein the lower housing (110,310,410,510) comprises a rail (111) formed on a bottom surface thereof, with which the first ball bearings (152,352,452,552) are in contact, so as to maintain a rotary track of each of the first ball bearings.

7. The stepping motor as claimed in any previous claim, further comprising a bearing guide (151,351,453) surrounding a side wall of the coupling member (132,332,432,532), which is in contact with the first ball bearings (152,352,452,552), the bearing guide being formed with a plurality of grooves which correspond to the first ball bearings, respectively.

8. The stepping motor as claimed in any previous claim, further comprising:
an anti-rotation groove (191) formed on a side wall, which projects from a part of a lateral surface of the lower housing (110) toward the upper housing (120) to be opposed to the shift (131);
a plain plate (200) constructed by an anti-rotation member (220) opposed to the anti-rotation groove (191), the end of the shift projecting through the upper housing being anchored to a hole formed at the central area of the plain plate (200); and
a second ball bearing (192) positioned between the anti-rotation groove (191) and the plain plate (200).

9. The stepping motor as claimed in any previous claim, further comprising a terminal substrate (180) for supplying electricity to the yoke unit, the terminal substrate being coupled to the open side of the lower housing (110).

10. The stepping motor according to any previous claim, comprising:
the upper and lower yokes having a plurality of teeth projecting toward the bobbin, respectively, which are in contact with each other;
a lower housing (110,310,410,510) within which the yoke unit and the rotary unit are mounted;
an upper housing (120,320,420,520) covering an open side of the lower housing, a part of the shift (131,331,431,531) projecting from the central area of the upper housing;
a plain plate (200,401,504), to which the end of the coupling member (132,332,432,532) projecting from the upper housing is anchored; and
a guide bar (421) extending from the upper housing (420) and through a side of the plain plate (401).

11. The stepping motor as claimed in claim 10, further comprising:
a plurality of ball bearings (152,452) interposed between the lower housing (110,410) and the permanent magnet (133,433); and
a bearing guide (151,351,453) surrounding a part of a side wall of the coupling member (132), which is in contact with the ball bearings (152).

12. A stepping motor (100,300,400,500) comprising:
a rotary unit comprising an annular permanent magnet (133,333,433,533), a shift (131,331,431,531) extending through the center of the permanent magnet, and a coupling member (132,332,432,532) screwed with an end of the shift;
a yoke unit comprising an annular bobbin (443) surrounding the lateral surface of the permanent magnet (433), upper and lower yokes (441,442) coupled to each other in a symmetric relationship with a reference to the bobbin (143,343,443,543), the upper and lower yokes (441,442) having a plurality of teeth projecting toward the bobbin (443), respectively, which are in contact with each other, and an electromagnetic coil (441b,442b) surrounding the teeth;
a lower housing (110,310,410,510) within which the yoke unit and the rotary unit are mounted;
an upper housing (120,320,420,520) covering an open side of the lower housing (110,310,410,510), a part of the shift (131,331,431,531) projecting from the central area of the upper housing;
a plain plate (200,401,504), to which the end of the coupling member projecting from the upper housing is anchored; and
an anti-rotation spring (220,502), one end of which is connected to the plain plate (200,401,504), and the other end of which is engaged in a groove (503) formed on a wall of the upper housing (520).

13. The stepping motor (100, 300,400,500) as claimed in claim 12, further comprising:
an elastic member (501) interposed between the lower housing (110,310,410,510) and one end of the shift (121,331,431,531); and
upper and lower bearings (161,162,361,362,461,462,562) fitted on the opposite ends of the shift, respectively.
